# EUROPEAN PATENT APPLICATION

(11) **EP 4 794 021 A1**
(43) Date of publication of application: **19.08.2026**
(21) Application number: 26155622.9
(22) Date of filing: 02.02.2026
(51) Int. Cl.: H01M 4/36, H01M 4/131, H01M 4/136, H01M 4/525, H01M 4/58

(54) **POSITIVE ELECTRODE AND RECHARGEABLE LITHIUM BATTERY INCLUDING THE SAME**

(30) Priority: 17.02.2025 KR 20250019960
(71) Applicant: SAMSUNG SDI CO., LTD., Yongin-si, Gyeonggi-do 17084 (KR)
(72) Inventor: PARK, Jinseok, 17084 Gyeonggi-do (KR); NAM, Hyun, 17084 Gyeonggi-do (KR); LEE, Minho, 17084 Gyeonggi-do (KR); YEOU, Jung Ock, 17084 Gyeonggi-do (KR); PARK, Jeongjoo, 17084 Gyeonggi-do (KR)
(74) Representative: Michalski Hüttermann & Partner mbB

(57) **Abstract**

Described is a positive electrode including a current collector, a first positive electrode active material layer on the current collector, and a second positive electrode active material layer on the first positive electrode active material layer. The first positive electrode active material layer includes a first positive electrode active material including a lithium iron phosphate-based compound. The second positive electrode active material layer includes a second positive electrode active material including a lithium iron phosphate-based compound and an oxide-based solid electrolyte. The oxide-based solid electrolyte is included in an amount in a range of about 0.1 wt% to about 3.0 wt% based on 100 wt% of a total of the second positive electrode active material layer.

## Description

### BACKGROUND

### 1. Field

A positive electrode, and a rechargeable lithium battery including the positive electrode, are disclosed.

### 2. Description of the Related Art

A portable information device such as, e.g., a cell phone, a laptop, smart phone, and the like, or an electric vehicle typically use a rechargeable lithium battery having high energy density and ready portability as a driving power source. Accordingly, a rechargeable lithium battery with high energy density as a driving power source or power storage power source for hybrid or electric vehicles may be advantageous.

Various positive electrode active materials have been investigated to realize rechargeable lithium batteries for the above applications. With increasing demand for rechargeable lithium batteries with improved performance, such as capacity and energy density, rapidly increasing, developing rechargeable lithium batteries that can exhibit long cycle-life characteristics while ensuring safety may be advantageous.

### SUMMARY

Some example embodiments include a positive electrode for a rechargeable lithium battery, and a rechargeable lithium battery including the positive electrode, which can exhibit long cycle-life characteristics while ensuring safety, reduce charge transfer resistance and ionic resistance of the positive electrode, reduce or suppress lithium precipitation and side reactions, reduce consumption of an electrolyte solution, and improve low-temperature cycle-life characteristics.

In some example embodiments, a positive electrode includes a current collector, a first positive electrode active material layer on the current collector, and a second positive electrode active material layer on the first positive electrode active material layer. The first positive electrode active material layer includes a first positive electrode active material including a lithium iron phosphate-based compound, and the second positive electrode active material layer includes a second positive electrode active material including a lithium iron phosphate-based compound and an oxide-based solid electrolyte. The oxide-based solid electrolyte is included in an amount in a range of ≥ 0.1 wt% to ≤ 3.0 wt% based on 100 wt% of a total of the second positive electrode active material layer.

In some example embodiments, a rechargeable lithium battery including the positive electrode, a negative electrode, and an electrolyte, is provided.

The positive electrode, and rechargeable lithium battery including the positive electrode, according to some example embodiments, may exhibit long cycle-life characteristics while ensuring desired or improved safety. In addition, the charge transfer resistance and ionic resistance of the positive electrode may be reduced, lithium precipitation and side reactions may be reduced or suppressed, consumption of the electrolyte solution may be reduced, and low-temperature cycle-life characteristics may be improved.

### BRIEF DESCRIPTION OF THE DRAWINGS

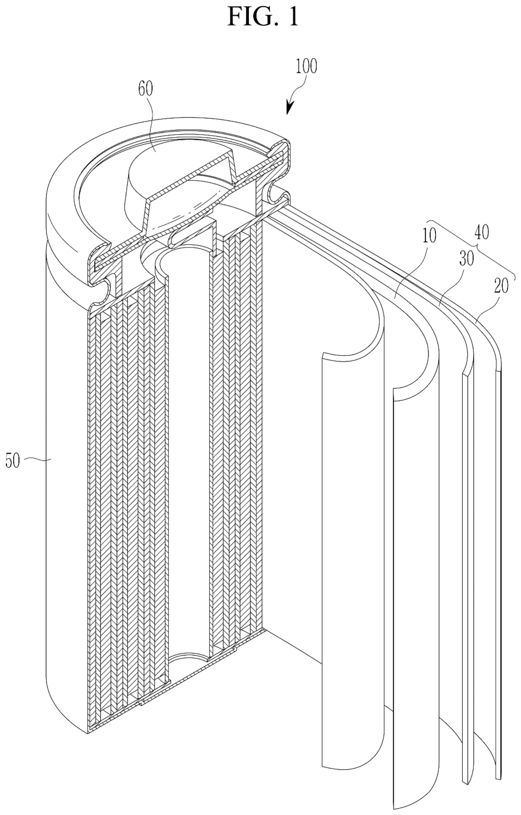

FIG. 1 to FIG. 4 are schematic views illustrating rechargeable lithium batteries according to some example embodiments.

### DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

"Combination thereof" refers to a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but does not preclude the possibility of the presence or addition of one or more other features, number, step, element, or a combination thereof.

In the drawings, the thickness of layers, films, panels, regions, and the like, are exaggerated for clarity and like reference numerals designate like elements throughout the specification. It is understood that when an element such as a layer, film, region, or substrate is referred to as being "on" another element, the element can be directly on the other element, or intervening elements may also be present therebetween. In contrast, when an element is referred to as being "directly on" another element, there may be no intervening elements present.

"Layer" herein includes not only a shape formed on the whole surface when viewed from a plan view, but also a shape formed on a partial surface.

The average particle diameter may be measured by a method known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating therefrom. As used herein, when a definition is not otherwise provided, the average particle diameter (D₅₀) may indicate a diameter of particles having a cumulative volume of 50 volume% in the particle size distribution. In addition, as used herein, when a definition is not otherwise provided, the average particle diameter (D₅₀) refers to a diameter of particles having a cumulative volume of 50 volume% in the particle size distribution that is obtained by measuring the size (diameter or long axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode

A positive electrode according to some example embodiments includes a current collector, a first positive electrode active material layer on the current collector, and a second positive electrode active material layer on the first positive electrode active material layer. The first positive electrode active material layer includes a first positive electrode active material including a lithium iron phosphate-based compound. The second positive electrode active material layer includes a second positive electrode active material including a lithium iron phosphate-based compound and an oxide-based solid electrolyte. The oxide-based solid electrolyte is included in an amount in a range of ≥ 0.1 wt% to ≤ 3.0 wt% based on 100 wt% of a total of the second positive electrode active material layer.

According to some example embodiments, the positive electrode may have a two-layer structure or a multi-layer structure. The positive electrode of such a multi-layer structure may secure desired or improved energy density and capacity, while also improving cycle-life characteristics and safety. For example, the first positive electrode active material layer on the current collector may improve or maximize energy density and capacity, and the second positive electrode active material layer on the first positive electrode active material layer may improve cycle-life characteristics and safety.

The second positive electrode active material layer may be or include a region that comes into contact with the negative electrode across the separator, and the like. Because the second positive electrode active material layer includes an oxide-based solid electrolyte, the second positive electrode active material layer may enable or facilitate smooth movement of electrons on the surface of the active material. For example, high-rate charge/discharge characteristics of the cell may be improved through the oxide-based solid electrolyte. For example, by including the oxide-based solid electrolyte, an amount of the liquid electrolyte may be reduced, so that the stability of the positive electrode, such as thermal stability and chemical resistance stability, may be improved. Accordingly, a rechargeable lithium battery including such a positive electrode can have improved stability and improved or maximized cycle-life characteristics, especially cycle-life characteristics at low temperatures.

### Current Collector

The current collector is not particularly limited as long as the current collector is conductive and does not cause adverse chemical changes to the positive electrode and the rechargeable lithium battery including the current collector. For example, the current collector may include a thin film of at least one of aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof, and may for example include an aluminum thin film.

The shape of the current collector may have various forms such as a plate, a thin body, a film, a sheet, a foil, a net, a porous body, a foam body, or a non-woven body. For example, the current collector may include microscopic irregularities on the surface thereof, which may improve adhesion to the positive electrode active material.

A thickness of the current collector may be in a range of ≥ 1 µm to ≤ 20 µm, for example ≥ 5 µm to ≤ 15 µm, or ≥ 7 µm to ≤ 10 µm.

### First Positive Electrode Active Material Layer

The first positive electrode active material layer is disposed on the current collector and includes a first positive electrode active material including a lithium iron phosphate-based compound. The first positive electrode active material layer may play a role in realizing high cycle-life characteristics while ensuring safety and price competitiveness through the first positive electrode active material.

The lithium iron phosphate-based compound of the first positive electrode active material may be represented by Chemical Formula 1 or Chemical Formula 2 below.

Chemical Formula 1: Liₐ₁Fe₍₁₋ₓ₁₎M¹ₓ₁PO₄.

In Chemical Formula 1, 0.90≤a1≤1.5, 0≤x1≤0.4, M¹ may be or include at least one of Al, B, Ca, Ce, Cr, Cu, La, Mg, Mn, Mo, Nb, Ni, Si, Sn, Sr, Ti, V, W, Y, Zn, and Zr.

In Chemical Formula 1, 0.90≤a1≤1.50, 0≤x1≤0.40; for example, 0.90≤a1≤1.40, 0≤x1≤0.30, 0.90≤a1≤1.30; 0≤x1≤0.20, 0.90≤a1≤1.20, 0≤x1≤0.15; 0.90≤a1≤1.10, 0≤x1≤0.15; or 0.95≤a1≤1.10, 0≤x1≤0.05.

Chemical Formula 2: Liₐ₂Mnₓ₂Fe_{(1-x2-y2)}M²_{y2}PO₄.

In Chemical Formula 2, 0.90≤a2≤1.5, 0.1≤x2≤0.9, 0≤y2≤0.9, and M² is or includes at least one of Al, B, Ca, Ce, Cr, Cu, La, Mg, Mo, Nb, Ni, Sn, Si, Sn, Sr, Ti, V, W, Y, Zn, and Zr.

In Chemical Formula 2, 0.90≤a2≤1.50, 0.10≤x2≤0.90, 0≤y2≤0.90; for example, 0.90≤a2≤1.40, 0.20≤x2≤0.90, 0≤y2≤0.70; 0.90≤a2≤1.30, 0.30≤x2≤0.90, 0≤y2≤0.50; 0.90≤a2≤1.20, 0.30≤x2≤0.85, 0≤y2≤0.30; 0.90≤a2≤1.10, 0.40≤x2≤0.85, 0≤y2≤0.10; or 0.95≤a2≤1.10, 0.40≤x2≤0.80, 0≤y2≤0.05.

As an example, the lithium iron phosphate-based compound of the first positive electrode active material may include at least one of LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, and LiMn_{0.3}Fe_{0.7}PO₄.

The lithium iron phosphate-based compound may include one or more of Al, Mg, Mn, Ti, and V, in which case the cycle-life characteristics may be improved. For example, the lithium iron phosphate-based compound may include one or more of Al, Mg, Ti, and V as a kind of doping element, and the one or more of Al, Mg, Ti, and V may be included in an amount in a range of ≥ 0.1 mol% to ≤ 0.5 mol% based on 100 mol% of the total metal excluding lithium in the lithium iron phosphate-based compound, and in this case, the rate capability and cycle-life characteristics may be improved. For example, the lithium iron phosphate-based compound includes Ti as a doping element, and a content of Ti may be satisfied to a range of ≥ 0.1 mol% to ≤ 0.5 mol% based on the entire metal excluding lithium. In this case, the rate capability and cycle-life characteristics may be improved.

For example, M¹ of Chemical Formula 1 and M² of Chemical Formula 2 may include one or more of Al, Mg, Ti, and V, and in this case, the cycle-life characteristics of the lithium iron phosphate-based positive electrode active material may be improved. For example, in Chemical Formula 1, 0.001 ≤ x1 ≤ 0.005, or 0.001 ≤ x1 ≤ 0.003 may be satisfied, and in Chemical Formula 2, 0.001 ≤ x2 ≤ 0.005, or 0.001 ≤ x2 ≤ 0.003 may be satisfied, and in this case, the cycle-life characteristics of the lithium iron phosphate-based positive electrode active material may be improved.

The first positive electrode active material may be included in an amount in a range of ≥ 60 wt% to ≤100 wt%, for example, ≥ 60 wt% to ≤ 99 wt%, ≥ 65 wt% to ≤ 99 wt%, ≥ 70 wt% to ≤ 99 wt%, or ≥ 80 wt% to ≤ 99 wt% based on a total of 100 wt% of the first positive electrode active material layer. When the amount of the first positive electrode active material is within the above ranges, high capacity and long cycle-life characteristics may be achieved.

The first positive electrode active material may include at least one of first particles in the form of an assembly in which a plurality of primary particles are agglomerated, and second particles in the form of a single particle.

The first particles may be in the form of an assembly, or in the form of secondary particles formed by agglomeration of a plurality of primary particles. The first particles may be spherical or ellipsoidal, as the first particles are formed by the primary particles being closely packed together.

An average particle diameter (D₅₀) of the first particles may be in a range of ≥ 6 µm to ≤ 25 µm, ≥ 7 µm to ≤ 20 µm, or ≥ 8 µm to ≤ 15 µm. The average particle diameter of the first particles may be larger than the average particle diameter of the second particles, which is described below. An average particle diameter of the primary particles forming the assembly of the first particles may be, for example, in a range of ≥ 10 nm to ≤ 400 nm, ≥ 20 nm to ≤ 300 nm, or ≥ 50 nm to ≤ 200 nm. Herein, the average particle diameter (D₅₀) of the first particles may be obtained by randomly selecting about 20 particles from a scanning electron microscope image of the first particles, measuring the particle diameters (diameter, long diameter, or long axis length) thereof to obtain a particle size distribution, and then taking the size of particles having a cumulative volume of 50 volume% from the particle size distribution as the average particle diameter. The average particle diameter (D₅₀) of the primary particles of the first particles may be obtained by measuring the sizes of about 30 primary particles in an electron microscope image of the surface or cross-section of the first particles and taking the diameter of the particles having a cumulative volume of 50 volume% from the particle size distribution as the average particle diameter.

A porosity of the first particles may be in a range of ≥ 20% to ≤ 50%. The porosity may be, for example, an area ratio of the portion occupied by pores within the particle measured using an image analysis program such as, e.g., Image J in a scanning electron microscope image of a cross-section of the first particles.

The second particles may be in the form of a single particle. The second particles may have various shapes, such as, e.g., polyhedral, spherical, ellipsoidal, plate-shaped, rod-shaped, or irregular. Herein, a single particle means a particle that exists alone without a grain boundary within the particle, and is composed of or include a single particle, and in terms of morphology, a single particle may mean a single particle, a monolithic structure, a single-body structure, or a non-agglomerated particle that exists as an independent phase in which the particles are not mutually agglomerated, and an example thereof may be a single crystal.

An average particle diameter (D₅₀) of the second particles may be less than or equal to about 2 µm, for example, in a range of ≥ 0.1 µm to ≤ 2 µm, ≥ 0.5 µm to ≤ 2 µm, ≥ 0.5 µm to ≤ 1.5 µm, ≥ 0.6 µm to ≤ 1.2 µm, or ≥ 0.8 µm to ≤ 1.0 µm. The average particle diameter of the second particles may be smaller than the average particle diameter of the first particles, and may be equal to or larger than the average particle diameter of the primary particles of the first particles. Herein, the average particle diameter (D₅₀) of the second particles may be obtained by randomly selecting about 20 particles from a scanning electron microscope image of the second particles, measuring the particle diameters (diameter, long diameter, or long axis length) thereof to obtain a particle size distribution, and then taking the size of particles having a cumulative volume of 50 volume% from the particle size distribution as the average particle diameter.

For example, the first positive electrode active material may include both the first particles and the second particles, in which case the first positive electrode active material may include ≥ 10 wt% to ≤ 90 wt% of the first particles and ≥ 10 wt% to ≤ 90 wt% of the second particles, for example, it may include ≥ 40 wt% to ≤ 60 wt% of the first particles and ≤ 60 wt% to ≥ 40 wt% of the second particles, based on a total of 100 wt% of the first and second particles. In this case, the energy density and cycle-life characteristics of the battery may be improved.

The lithium iron phosphate-based compound may further include a carbon coating layer on the particle surface. The carbon coating layer may improve the electrical conductivity of the lithium iron phosphate-based compound and reduce the resistance of the positive electrode. The carbon coating layer may be formed using, for example, one or more raw materials such as or including at least one of glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenolic resin, a pitch resin, and a tar resin. For example, the carbon coating layer may be formed by placing the raw materials on the surface of the lithium iron phosphate-based compound particles, and then performing a firing process.

For example, the first positive electrode active material may include first particles in the form of secondary particles, and the first positive electrode active material may further include a carbon coating layer on the surface of the secondary particles and/or the surface of the primary particles constituting the secondary particles. Additionally, the first positive electrode active material may include second particles in the form of single particles, and may further include a carbon coating layer on the surface of the single particles.

In addition to the aforementioned first positive electrode active material, the first positive electrode active material layer may further include various types of positive electrode active materials commonly used in rechargeable lithium batteries, for example, at least one of a lithium nickel-based composite oxide, a lithium cobalt-based composite oxide, a lithium manganese-based composite oxide, a cobalt-free lithium nickel-manganese-based composite oxide, a lithium-manganese-rich composite oxide, or a combination thereof.

For example, the first positive electrode active material layer may further include a third positive electrode active material including a lithium nickel-based composite oxide. When a third positive electrode active material including the lithium nickel-based composite oxide, which is a high-capacity material, is further included, the capacity and energy density of the positive electrode may be further improved.

The lithium nickel-based composite oxide of the third positive electrode active material can be represented by Chemical Formula 3.

Chemical Formula 3: Liₐ₃Niₓ₃M³_{y3}M⁴ _{z3}O_{2-b3}X_{b3}.

In Chemical Formula 3, 0.9≤a3≤1.8, 0.3≤x3≤1, 0≤y3≤0.7, 0≤z3≤0.7, 0.9≤x3+y3+z3≤1.1, and 0≤b3≤0.1, M³ and M⁴ each independently is or includes one or more of Al, B, Ba, Ca, Ce, Co, Cr, Cu, Fe, Mg, Mn, Mo, Nb, Si, Sn, Sr, Ti, V, W, Y, Zn, and Zr, and X may be or include one or more of F, P, and S.

In Chemical Formula 3, 0.4≤x3≤1, 0≤y3≤0.6, 0≤z3≤0.6; for example, 0.5≤x3≤1, 0≤y3≤0.5, 0≤z3≤0.5; 0.6≤x3≤1, 0≤y3≤0.4, 0≤z3≤0.4; 0.7≤x3≤1, 0≤y3≤0.3, 0≤z3≤0.3; or 0.8≤x3≤1, 0≤y3≤0.2, 0≤z3≤0.2; 0.9≤x3<1, 0<y3≤0.1, 0≤z3≤0.1.

For example, in the lithium nickel-based composite oxide of the third positive electrode active material, nickel may be included in an amount that is greater than or equal to about 80 mol%, for example, greater than or equal to about 85 mol%, greater than or equal to about 90 mol%, greater than or equal to about 91 mol%, or greater than or equal to about 94 mol%, and may be included in an amount that is less than or equal to about 99 mol% based on a total of 100 mol% of metals other than lithium. In this case, the third positive electrode active material may be or include a high nickel-based positive electrode active material. Because high nickel-based positive electrode active materials may achieve high capacity, high nickel-based positive electrode active materials may achieve high capacity and high density in rechargeable lithium batteries.

For example, in the case of a high nickel-based positive electrode active material, although the capacity thereof is high, a deterioration rate may be relatively fast, but because the positive electrode according to some example embodiments has a multilayer structure including a second positive electrode active material layer on a first positive electrode active material layer, the above-mentioned problem may be reduced or prevented. For example, because the electrochemical reaction in the second positive electrode active material layer described below occurs faster than in the first positive electrode active material layer, deterioration of the third positive electrode active material may be improved, and side reactions between the third positive electrode active material and the electrolyte solution may be reduced or prevented. Accordingly, the stability and cycle-life characteristics of rechargeable lithium batteries may be improved or maximized.

The third positive electrode active material may be in at least one of the form of secondary particles formed by agglomeration of plurality of primary particles and in the form of single particles. For example, the third positive electrode active material may be spherical, elliptical, polyhedral, or irregularly shaped.

An average particle diameter (D₅₀) of the third positive electrode active material may be in a range of ≥ 1 µm to ≤ 25 µm, ≥ 3 µm to ≤ 20 µm, or ≥ 3 µm to ≤ 15 µm. When the particle diameter of the third positive electrode active material is within the above range, the capacity of the positive electrode can be further improved. Herein, the average particle diameter (D₅₀) of the third positive electrode active material may be obtained by randomly selecting about 20 particles from a scanning electron microscope image of the third positive electrode active material, measuring the particle diameters (diameter, long diameter, or long axis length) thereof to obtain a particle size distribution, and then taking the size of particles having a cumulative volume of 50 volume% from the particle size distribution as the average particle diameter.

For example, the third positive electrode active material including the lithium nickel-based composite oxide may include at least one of large particles having an average particle diameter (D₅₀) in a range of ≥ 10 µm to ≤ 25 µm and small particles having an average particle diameter (D₅₀) in a range of ≥ 1 µm to ≤ 8 µm. The large particles may be in the form of secondary particles formed by the agglomeration of a plurality of primary particles, and the small particles may be in the form of secondary particles, single particles, or a combination thereof.

The average particle diameter (D₅₀) of the large particles may be, for example, in a range of ≥ 11 µm to ≤ 20 µm, or ≥ 12 µm to ≤ 18 µm. The average particle diameter (D₅₀) of the small particles may be, for example, in a range of ≥ 1 µm to ≤ 6 µm, or ≥ 2 µm to ≤ 5 µm. Herein, the average particle diameter (D₅₀) refers to a diameter of particles having a cumulative volume of 50 volume% in the particle size distribution that is obtained by measuring the size (diameter or long axis length) of about 20 particles at random in a scanning electron microscope image for positive electrode active materials.

The third positive electrode active material may include ≥ 40 wt% to ≤ 95 wt% of the large particles, and ≥ 5 wt% to ≤ 60 wt% of the small particles, for example, ≥ 60 wt% to ≤ 80 wt% of the large particles and ≥ 20 wt% to ≤ 40 wt% of the small particles, based on 100 wt% of the total of the large and the small particles.

In the first positive electrode active material layer, the first positive electrode active material may be included in an amount in a range of ≥ 60 wt% to ≤ 95 wt%, for example, ≥ 60 wt% to ≤ 95 wt%, ≥ 60 wt% to ≤ 90 wt%, ≥ 70 wt% to ≤ 90 wt%, or ≥ 70 wt% to ≤ 85 wt%, and the third positive electrode active material may be included in an amount in a range of ≥ 5 wt% to ≤ 40 wt%, for example, ≥ 10 wt% to ≤ 40 wt%, ≥ 15 wt% to ≤ 40 wt%, ≥ 15 wt% to ≤ 35 wt%, or ≥ 20 wt% to ≤ 30 wt% based on a total of 100 wt% of the first positive electrode active material and the third positive electrode active material. When the amounts of the first positive electrode active material and the third positive electrode active material are within the above ranges, the energy density of the positive electrode may be improved or maximized, and the capacity and cycle-life characteristics of the rechargeable lithium battery may be improved.

For example, the third positive electrode active material may be included in the first positive electrode active material layer alone. In this case, the amount of the third positive electrode active material based on 100 wt% of the second positive electrode active material layer may be less than about 1 wt%. Because the third positive electrode active material including the lithium nickel-based composite oxide deteriorates faster during charge and discharge than the first positive electrode active material and the second positive electrode active material including the lithium iron phosphate-based compound, if (when) it is not included in the second positive electrode active material layer where the electrochemical reaction occurs first and is included in the first positive electrode active material layer alone where the electrochemical reaction occurs later, the deterioration rate of the third positive electrode active material may be slowed down to secure cycle-life characteristics, and the effect of increasing capacity and energy density due to the addition of the third positive electrode active material may be improved or maximized.

The first positive electrode active material layer may include an oxide-based solid electrolyte in an amount of less than or equal to about 0.01 wt%, for example, less than or equal to about 0.009 wt%, less than or equal to about 0.008 wt%, less than or equal to about 0.007 wt%, less than or equal to about 0.006 wt%, or less than or equal to about 0.005 wt%, or ≥ 0 wt% to ≤ 0.01 wt% based on 100 wt% of the total weight of the first positive electrode active material layer. Because the first positive electrode active material layer may not include an oxide-based solid electrolyte, the lower limit of the amount of the oxide-based solid electrolyte is not particularly limited. Although the first positive electrode active material layer does not include an oxide-based solid electrolyte, the positive electrode according to some example embodiments has a multilayer structure, so that the first positive electrode active material and the third positive electrode active material may be reduced or prevented from being broken, and the thermal stability, chemical resistance stability, and the like, of the positive electrode may be improved.

A loading level of the first positive electrode active material layer may be in a range of ≥ 5 mg/cm² to ≤ 40 mg/cm², for example ≥ 5 mg/cm² to ≤ 30 mg/cm², or ≥ 10 mg/cm² to ≤ 30 mg/cm². Additionally, the density of the first positive electrode active material layer in the compressed final positive electrode may be in a range of ≥ 3.0 g/cc to ≤ 4.0 g/cc, for example ≥ 3.0 g/cc to ≤ 3.7 g/cc, ≥ 3.0 g/cc to ≤ 3.6 g/cc, or ≥ 3.1 g/cc to ≤ 3.58 g/cc.

### Second Positive Electrode Active Material Layer

The second positive electrode active material layer is disposed on the first positive electrode active material layer and includes a second positive electrode active material including a lithium iron phosphate-based compound and an oxide-based solid electrolyte. The second positive electrode active material layer may reduce or suppress direct contact between the electrolyte solution and the first positive electrode active material layer, thereby reducing or minimizing side reactions between the electrolyte solution and the first positive electrode active material. In addition, because the second positive electrode active material layer includes an oxide-based solid electrolyte, the thermal stability and chemical resistance stability of the positive electrode may be improved, and the phenomenon of positive electrode active material particles being broken during the compression process during the manufacture of the positive electrode may be reduced or suppressed. Accordingly, a rechargeable lithium battery including such a positive electrode may have improved stability and improved or maximized cycle-life characteristics, especially cycle-life characteristics at low temperatures.

Because the lithium iron phosphate-based compound of the second positive electrode active material may be described in the same way as the lithium iron phosphate-based compound of the first positive electrode active material, a detailed description thereof is omitted. For example, the type of the lithium iron phosphate-based compound of the second positive electrode active material may be the same as, or different from, the type of the lithium iron phosphate-based compound of the first positive electrode active material.

The second positive electrode active material may be included in an amount in a range of ≥ 60 wt% to ≤ 99.9 wt%, for example, ≥ 65 wt% to ≤ 99 wt%, ≥ 70 wt% to ≤ 99 wt%, or ≥ 75 wt% to ≤ 99 wt% based on a total of 100 wt% of the second positive electrode active material layer. When an amount of the second positive electrode active material is within the above range, high capacity and long cycle-life characteristics may be achieved.

The second positive electrode active material may include (e.g., be) at least one of the aforementioned first particles and second particles. Because the details are as described above, a detailed explanation thereof is omitted below.

The oxide-based solid electrolyte is included in an amount in a range of ≥ 0.1 wt% to ≤ 3.0 wt%, for example, ≥ 0.1 wt% to ≤ 2.8 wt%, ≥ 0.1 wt% to ≤ 2.5 wt%, ≥ 0.1 wt% to ≤ 2.0 wt%, or ≥ 0.5 wt% to ≤ 2.0 wt% based on 100 wt% of the total weight of the second positive electrode active material layer. When an amount of the oxide-based solid electrolyte is within the above range, the resistance to ion movement is reduced, ionic conductivity is improved, and thus the charge/discharge efficiency, capacity, and cycle-life characteristics of the rechargeable lithium battery may be improved.

The oxide-based solid electrolyte may include at least one of garnet ceramics of Li_{1+x+y}AlₓTi₂₋ₓSi_{y}P_{3-y}O₁₂ (LATP) (0<x<2, 0≤y<3), BaTiO₃, Pb(Zr,Ti)O₃(PZT), Pb₁₋ₓLaₓZr_{1-y}Ti_{y}O₃ (PLZT) (0≤x<1, 0≤y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂, and Li₃₊ₓLa₃M₂O₁₂, wherein M is or includes at least one of Te, Nb, or Zr, and x is an integer ranging from 1 to 10.

The average particle diameter (D₅₀) of the oxide-based solid electrolyte may be in a range of ≥ 0.05 µm to ≤ 7.0 µm, for example, ≥ 0.05 µm to ≤ 6.5 µm, ≥ 0.1 µm to ≤ 6.5 µm, or ≥ 0.1 µm to ≤ 6.0 µm. As another example, the oxide-based solid electrolyte may be small particles having an average particle diameter (D₅₀) in a range of ≥ 0.5 µm to ≤ 1.0 µm, or may be large particles having an average particle diameter (D₅₀) in a range of ≥ 1.0 µm to ≤ 5.0 µm, depending on the location or purpose of use. When the average particle diameter of the oxide-based solid electrolyte is within the above range, the oxide-based solid electrolyte particles may effectively penetrate between solid particles in the battery, and have desired or improved contact with the positive electrode active material, and connectivity between the solid electrolyte particles. Herein, the average particle diameter (D₅₀) of the oxide-based solid electrolyte may be obtained by randomly selecting about 20 particles from a scanning electron microscope image of the oxide-based solid electrolyte, measuring the particle diameters (diameter, long diameter, or long axis length) thereof to obtain a particle size distribution, and then taking the size of particles having a cumulative volume of 50 volume% from the particle size distribution as the average particle diameter.

In addition to the second positive electrode active material described above, the second positive electrode active material layer may further include various types of positive electrode active materials commonly used in rechargeable lithium batteries. For example, the second positive electrode active material layer may further include a third positive electrode active material including a lithium nickel-based composite oxide. Because the third positive electrode active material of the second positive electrode active material layer may be described in the same way as the third positive electrode active material of the first positive electrode active material layer, a detailed description thereof is omitted. For example, the type of the third positive electrode active material of the second positive electrode active material layer may be the same as, or different from, the type of the third positive electrode active material of the first positive electrode active material layer.

In addition to the second positive electrode active material and oxide-based solid electrolyte described above, the second positive electrode active material layer may further include various types of solid electrolytes commonly used in rechargeable lithium batteries. For example, the second positive electrode active material layer may further include at least one of a sulfide-based solid electrolyte, a halide-based solid electrolyte, a polymer solid electrolyte, or a combination thereof.

The sulfide-based solid electrolyte may be applied without limitation as long as the sulfide-based solid electrolyte is commonly used in rechargeable lithium batteries. For example, the sulfide-based solid electrolyte may include at least one of Li₂S-P₂S₅, Li₂S-P₂S₅-LiX (where X is a halogen element, for example I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-Sis2-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are integers, respectively, and Z is or includes at least one of Ge, Zn, or Ga), Li₂S-GeS₂, Li₂S-SiS₂-Li₃PO₄, and Li₂S-SiS₂-LiₚMO_{q} (where p and q are integers, and M is or includes at least one of P, Si, Ge, B, Al, Ga, or In).

For example, the sulfide-based solid electrolyte may include an argyrodite-type sulfide. For example, an argyrodite-type sulfide may be represented by the chemical formula LiₐM_{b}P_{c}S_{d}Aₑ (wherein a, b, c, d and e are all 0 or more and 12 or less, M is or includes a metal other than Li, or a combination of multiple metals other than Li, and A is or includes at least one of F, CI, Br, or I), and as an example, the argyrodite-type sulfide may be represented by the chemical formula Li₇₋ₓPS₆₋ₓAₓ (wherein x is 0.2 or more and 1.8 or less, and A is or includes at least one of F, Cl, Br, or I). For example, the argyrodite-type sulfide may be or includes at least one of Li₃PS₄, Li₇P₃S₁₁, Li₇PS₆, Li₆PS₅Cl, Li₆PS₅Br, Li_{5.8}PS_{4.8}Cl_{1.2}, or Li_{6.2}PS_{5.2}Br_{0.8}.

The halide-based solid electrolyte may include an Li element, a M element (M is a metal other than Li), and an X element (X is a halogen). For example, X may be or include one or more of the elements F, Cl, Br, and I. For example, in the halide-based solid electrolyte, X may be or include one or more of Br and Cl. Additionally, for example, M may be or include a metallic element such as at least one of Sc, Y, B, Al, Ga, or In.

For example, the composition of the halide-based solid electrolyte is not particularly limited, but may be represented by, for example, Li₆₋₃ₐMₐBr_{b}Cl_{c} (wherein M is or includes a metal other than Li, 0<a<2, 0≤b≤6, 0≤c≤6, and b+c=6). Herein, "a" may be 0.75 or more, or 1 or more, and 1.5 or less. Additionally, "b" may be 1 or more, or 2 or more. Additionally, "c" may be 3 or more, or 4 or more. For example, the halide-based solid electrolyte may be or include at least one of Li₃YBr₆, Li₃YCl₆, or Li₃YBr₂Cl₄.

The polymer solid electrolyte may be applied without limitation as long as the polymer solid electrolyte is commonly used in rechargeable lithium batteries. For example, polymer solid electrolytes may include at least one of polyethylene oxide, poly(diallydimethylammonium)trifluoromethanesulfonylimide (poly(diallyldimethylammonium) TFSI), Cu₃N, Li₃N, LiPON, Li₃PO₄·Li₂S·SiS₂, Li₂S·GeS₂·Ga₂S₃, Li₂O·11Al₂O₃, Na₂O·11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-silicate, Li_{0.3}La_{0.5}TiO₃, Na₅MSi₄O₁₂ (M is a rare earth element such as Nd, Gd, or Dy), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (x≤0.8, 0≤y≤1.0, and M is Nd, Sm, Eu, Gd, Tb, Dy, Ho, Er, Tm, or Yb), Li_{1+x+y}QₓTi₂₋ₓSiyP_{3-y}O₁₂ (0<x≤0.4, 0<y≤0.6, and Q is Al or Ga), Li₆BaLa₂Ta₂O₁₂, Li₇La₃Zr₂O₁₂, Li₅La₃Nb₂O₁₂, Li₅La₃M₂O₁₂ (M is or includes Nb or Ta), and Li₇₊ₓAₓLa₃₋ₓZr₂O₁₂ (0<x<3, A is or includes Zn).

A solid electrolyte other than an oxide-based solid electrolyte may be included in an amount in a range of ≥ 0 wt% to ≤ 35 wt%, for example, ≥ 1 wt% to ≤ 35 wt%, ≥ 5 wt% to ≤ 30 wt%, ≥ 8 wt% to ≤ 25 wt%, or ≥ 10 wt% to ≤ 20 wt% based on 100 wt% of the total of the second positive electrode active material layer. When the amount of the solid electrolyte is within the above range, the thermal stability and chemical resistance stability of the positive electrode may be further improved.

A loading level of the second positive electrode active material layer may be in a range of ≥ 10 mg/cm² to ≤ 40 mg/cm², for example ≥ 5 mg/cm² to ≤ 30 mg/cm², or ≥ 10 mg/cm² to ≤ 30 mg/cm². Additionally, a density of the second positive electrode active material layer in the compressed final positive electrode may be in a range of ≥ 3.0 g/cc to ≤ 4.0 g/cc, for example ≥ 3.0 g/cc to ≤ 3.7 g/cc, ≥ 3.0 g/cc to ≤ 3.6 g/cc, or ≥ 3.1 g/cc to ≤ 3.58 g/cc.

The thickness of the first positive electrode active material layer and the thickness of the second positive electrode active material layer may be the same or different, and may each be in a range of ≥ 20 µm to ≤ 200 µm, for example, ≥ 40 µm to ≤ 150 µm, or ≥ 50 µm to ≤ 100 µm.

A ratio of the thickness of the first positive electrode active material layer to the thickness of the second positive electrode active material layer may be in a range of about 10:90 to about 90:10, for example, about 20:80 to about 80:20, about 30:70 to about 70:30, about 40:60 to about 60:40, or may be designed as about 10:90 to about 40:60 or designed as about 60:40 to about 90:10.

In addition to the aforementioned positive electrode active material, the first positive electrode active material layer and the second positive electrode active material layer may each further include a binder, a conductive material, or a combination thereof.

### Binder

The binder adheres the positive electrode active material particles to each other, and adheres the positive electrode active material to the current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin, nylon, and the like, but are not limited thereto.

In the first positive electrode active material layer, the binder may be included in an amount in a range of ≥ 0.5 wt% to ≤ 5 wt%, for example, ≥ 0.5 wt% to ≤ 4 wt%, or ≥ 1 wt% to ≤ 3 wt% based on 100 wt% of the total weight of the first positive electrode active material layer.

In the second positive electrode active material layer, the binder may be included in an amount in a range of ≥ 0.5 wt% to ≤ 5 wt%, for example, ≥ 0.5 wt% to ≤ 4 wt%, or ≥ 1 wt% to ≤ 3 wt% based on 100 wt% of the total of the second positive electrode active material layer.

### Conductive Material

The conductive material is included to provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

In the first positive electrode active material layer, the conductive material may be included in an amount in a range of ≥ 0.5 wt% to ≤ 5 wt%, for example, ≥ 0.5 wt% to ≤ 4 wt%, or ≥ 1 wt% to ≤ 3 wt% based on 100 wt% of the total weight of the first positive electrode active material layer.

In the second positive electrode active material layer, the conductive material may be included in an amount in a range of ≥ 0.5 wt% to ≤ 5 wt%, for example, ≥ 0.5 wt% to ≤ 4 wt%, or ≥ 1 wt% to ≤ 3 wt% based on 100 wt% of the total of the second positive electrode active material layer.

### Rechargeable Lithium Battery

The rechargeable lithium battery according to some example embodiments includes the aforementioned positive electrode, a negative electrode, and an electrolyte. The rechargeable lithium battery may be a lithium ion battery including a liquid electrolyte, an all-solid-state rechargeable battery including a solid electrolyte, or a semi-solid rechargeable battery. For convenience, the configuration of a lithium-ion battery is described in detail below.

The rechargeable lithium battery may be classified into cylindrical, prismatic, pouch, coin, and the like, depending on the shape thereof. FIG. 1 to FIG. 4 are schematic diagrams showing the rechargeable lithium battery according to some example embodiments, where FIG. 1 is a cylindrical battery, FIG. 2 is a prismatic battery, and FIG. 3 and FIG. 4 are a pouch-shaped battery.

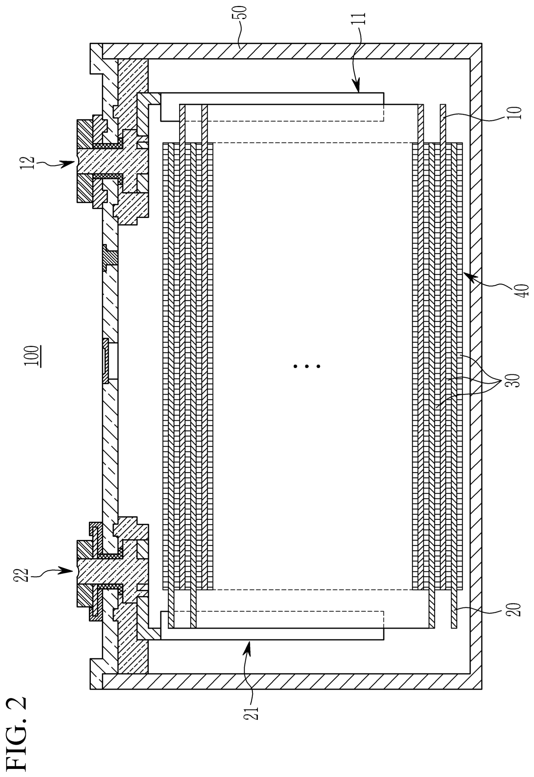

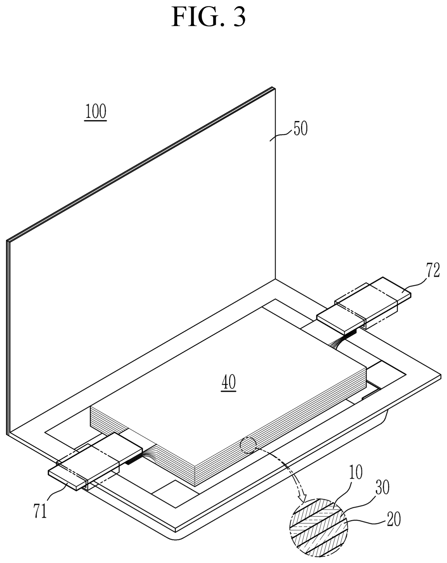

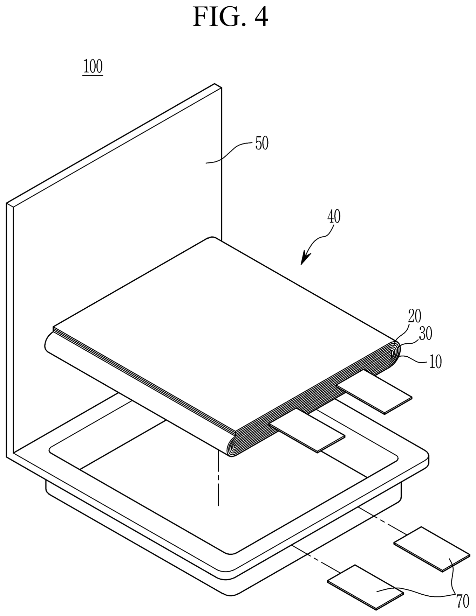

Referring to FIG. 1 to FIG. 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the rechargeable lithium battery 100.

A rechargeable lithium battery according to some example embodiments may be capable of being charged at a high voltage, or may be suitable for being driven at a high voltage. For example, the charging voltage of a rechargeable lithium battery may be greater than or equal to about 4.45 V, ≥ 4.45 V to ≤ 4.7 V, ≥ 4.45 V to ≤ 4.6 V, or ≥ 4.45 V to ≤ 4.55 V, and the like. The rechargeable lithium battery may significantly reduce an amount of gas generated and achieve high capacity and long cycle-life characteristics even when charged at high voltage by applying a positive electrode active material according to some example embodiments.

### Negative Electrode

The negative electrode may include a current collector, and a negative electrode active material layer on the current collector. The negative electrode active material layer includes a negative electrode active material and may further include a binder, a conductive material, or a combination thereof.

### Negative Electrode Active Material

The negative electrode active material includes at least one of a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be or include a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

As the lithium metal alloy, an alloy of lithium and a metal such as or including at least one of Na, K, Rb, Cs, Fr, Be, Mg, Ca, Sr, Si, Sb, Pb, In, Zn, Ba, Ra, Ge, Al, and Sn may be used.

The material capable of doping/dedoping lithium may be or include a Si-based negative electrode active material or a Sn-based negative electrode active material. The Si-based negative electrode active material may be or include at least one of silicon, a silicon-carbon composite, SiOₓ (0<x≤2), a Si-Q alloy (wherein Q is or includes an element such as at least one of an alkali metal, an alkaline earth metal, a Group 13 element, a Group 14 element (excluding Si), a Group 15 element, a Group 16 element, a transition metal, a rare earth element, and a combination thereof), and may be or include, for example, at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. The average particle diameter (D₅₀) of the silicon-carbon composite particles may be, for example, in a range of ≥ 0.5 µm to ≤ 20 µm. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon, hard carbon, a mesophase pitch carbonized product, calcined coke, and the like.

When the silicon-carbon composite includes silicon and amorphous carbon, an amount of the silicon may be in a range of ≥ 10 wt% to ≤ 50 wt%, and an amount of the amorphous carbon may be in a range of ≥ 50 wt% to ≤ 90 wt% based on 100 wt% of the silicon-carbon composite. In addition, when the composite includes silicon, amorphous carbon, and crystalline carbon, an amount of silicon may be in a range of ≥ 10 wt% to ≤ 50 wt%, an amount of crystalline carbon may be in a range of ≥ 10 wt% to ≤ 70 wt%, and an amount of amorphous carbon may be in a range of ≥ 20 wt% to ≤ 40 wt% based on 100 wt% of the silicon-carbon composite.

Additionally, a thickness of the amorphous carbon coating layer may be in a range of ≥ 5 nm to ≤ 100 nm. An average particle diameter (D₅₀) of the silicon particles (primary particles) may be in a range of ≥ 10 nm to ≤ 1 µm, or ≥ 10 nm to ≤ 200 nm. The silicon particles may be present as silicon alone, in the form of a silicon alloy, or in an oxidized form. The oxidized form of the silicon may be represented as SiOₓ (0<x≤2). For example, the atomic content ratio of Si:O, which indicates the degree of oxidation, may be in a range of about 99:1 to about 33:67.

The Si-based negative electrode active material or Sn-based negative electrode active material may be mixed with the carbon-based negative electrode active material. When the Si-based negative electrode active material or the Sn-based negative electrode active material is used in combination with a carbon-based negative electrode active material, a weight ratio of the Si-based negative electrode active material or the Sn-based negative electrode active material to the carbon-based negative electrode active material may be in a range of about 1:99 to about 90:10.

The negative electrode active material may be included in an amount in a range of ≥ 80 wt% to ≤ 99 wt%, for example, ≥ 85 wt% to ≤ 99 wt%, or ≥ 90 wt% to ≤ 99 wt% based on 100 wt% of the total negative electrode active material layer.

### Binder

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The binder may be included in an amount in a range of ≥ 0.5 wt% to ≤ 5 wt%, for example, ≥ 0.5 wt% to ≤ 4 wt%, or ≥ 1 wt% to ≤ 3 wt% based on 100 wt% of the total negative electrode active material layer.

### Conductive Material

The conductive material is included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, Ketjen black, a carbon fiber, a carbon nanofiber, a carbon nanotube, Denka black and the like; a metal-based material of a metal powder or a metal fiber including at least one of copper, nickel, aluminum silver, and the like; a conductive polymer such as a polyphenylene derivative; or a mixture thereof.

The conductive material may be included in an amount in a range of ≥ 0.5 wt% to ≤ 5 wt%, for example, ≥ 0.5 wt% to ≤ 4 wt%, or ≥ 1 wt% to ≤ 3 wt% based on 100 wt% of the total negative electrode active material layer.

### Current Collector

There is no particular limitation on the negative electrode current collector as long as the negative electrode current collector does not cause chemical changes in the negative electrode and the rechargeable lithium battery including the negative electrode. For example, the negative current collector may be or include at least one of a copper foil, a nickel foil, a stainless steel foil, a titanium foil, a nickel foam, a copper foam, a polymer substrate coated with a conductive metal, or a combination thereof.

The shape of the negative electrode collector may have various shapes, such as a plate, a thin body, a film, a sheet, a foil, a net, a porous body, a foam body, or a non-woven body. For example, the negative electrode current collector may include fine irregularities on the surface thereof, which may improve adhesion to the negative electrode active material.

A thickness of the negative electrode current collector may be in a range of ≥ 1 µm to ≤ 20 µm, for example, ≥ 5 µm to ≤ 15 µm, or ≥ 7 µm to ≤ 10 µm.

### Electrolyte

For example, an electrolyte for a rechargeable lithium battery may be an electrolyte solution, and may include a non-aqueous organic solvent and a lithium salt.

The non-aqueous organic solvent constitutes a medium for transmitting ions taking part in the electrochemical reaction of a battery. The non-aqueous organic solvent may be or include at least one of a carbonate-based, ester-based, ether-based, ketone-based, alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like.

The ketone-based solvent may include cyclohexanone, and the like. The alcohol-based solvent may include ethanol, isopropyl alcohol, and the like. The aprotic solvent may include at least one of nitriles such as R-CN, (where R is or includes a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in combination of two or more solvents, and when two or more types of solvents are used in combination, the mixing ratio may be appropriately adjusted depending on intended battery performances, which is widely understood by those working in the relevant field.

When using a carbonate-based solvent, a cyclic carbonate and a chain carbonate may be mixed, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio in a range of about 1:1 to about 30:1.

The electrolyte solution may further include at least one of vinylethylene carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables an operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFOP), and lithium bis(oxalato) borate (LiBOB).

A concentration of lithium salt may be within the range of ≥ 0.1 M to ≤ 2.0 M. When the concentration of lithium salt is within the above range, the electrolyte solution has appropriate ionic conductivity and viscosity, and thus desired or improved performance can be achieved and lithium ions can move more effectively.

### Separator

Depending on the type of the rechargeable lithium battery, the rechargeable lithium battery may further include a separator between the positive and negative electrodes. For example, the separator may include at least one of polyethylene, polypropylene, polyvinylidene fluoride, or a multilayer film of two or more layers thereof, and may of course be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one surface, or on both surfaces, of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON^{®}), or a copolymer or mixture of two or more thereof.

The porous substrate may have a thickness in a range of ≥ 1 µm to ≤ 40 µm, for example, ≥ 1 µm to ≤ 30 µm, ≥ 1 µm to ≤ 20 µm, ≥ 5 µm to ≤ 15 µm, or ≥ 10 µm to ≤ 15 µm.

The organic material may include a (meth)acrylic copolymer including at least one of a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of ≥ 1 nm to ≤ 2000 nm, for example, ≥ 100 nm to ≤ 1000 nm, or ≥ 100 nm to ≤ 700 nm. Herein, the average particle diameter (D₅₀) of the inorganic particles may be obtained by randomly selecting about 20 particles from a scanning electron microscope image of the inorganic particles, measuring the particle diameters (diameter, long diameter, or long axis length) thereof to obtain a particle size distribution, and then taking the size of particles having a cumulative volume of 50 volume% from the particle size distribution as the average particle diameter.

The organic material and the inorganic material may be mixed in one coating layer, or a coating layer including an organic material and a coating layer including an inorganic material may be stacked together. A thickness of the coating layer may be in a range of ≥ 0.5 µm to ≤ 20 µm, for example, ≥ 1 µm to ≤ 10 µm, or ≥ 1 µm to ≤ 5 µm.

A rechargeable lithium battery according to some example embodiments may be applicable to, e.g., automobiles, mobile phones, or various types of electrical devices, but is not limited thereto.

Examples and comparative examples of the present disclosure are described below. However, the following examples are only examples of the present disclosure, and the present disclosure is not limited to the following examples.

### Example 1

### (1) Preparation of First Positive Electrode Active Material Layer

A first positive electrode active material was prepared by mixing first particles having a composition of LiFePO₄, an assembly form in which a plurality of primary particles were agglomerated, and an average particle diameter (D₅₀) of about 14 µm and second particles having a composition of LiFePO₄, a single particle shape, and an average particle diameter (D₅₀) of about 1 µm in a weight ratio of 50 : 50. A third positive electrode active material was prepared by mixing large particles having a composition of LiNi_{0.88}Co_{0.11}Mn_{0.01}O₂ in a form of secondary particles having an average particle diameter (D₅₀) of about 13 µm and small particles in a form of single particles having an average particle diameter (D₅₀) of about 3 µm in a weight ratio of 7 : 3. 80 wt% of the first positive electrode active material and 20 wt% of the third positive electrode active material were mixed to prepare a positive electrode active material mixture.

97.7 wt% of the positive electrode active material mixture, 1.2 wt% of a polyvinylidene fluoride binder, and 1.1 wt% of a carbon nanotube conductive material were mixed to prepare a first positive electrode active material layer slurry. The first positive electrode active material layer slurry was coated on an aluminum foil current collector, and then dried to form a first positive electrode active material layer.

### (2) Preparation of Second Positive Electrode Active Material Layer

After dispersing LiFePO₄, a polyvinylidene fluoride binder, and a carbon nanotube conductive material, Li_{1.3}Al_{0.3}Ti_{1.7}P₃O₁₂ (average particle diameter (D₅₀): 3.1 µm) as an oxide-based solid electrolyte was added thereto to prepare a second positive electrode active material layer slurry. Herein, the second positive electrode active material layer slurry had a composition of 0.5 wt% of Li_{1.3}Al_{0.3}Ti_{1.7}P₃O₁₂, 97.2 wt% of LiFePO₄, 1.2 wt% of a polyvinylidene fluoride binder, and 1.1 wt% of a carbon nanotube conductive material.

The second positive electrode active material layer slurry was coated on the first positive electrode active material layer prepared in the (1) and dried to form a second positive electrode active material layer, and then compressed to manufacture a positive electrode.

In the manufactured positive electrode, the first and second positive electrode active material layers had each loading level of 10 mg/cm², and the compressed first and second positive electrode active material layers had each density of about 3.38 g/cc. In addition, as a result of SEM analysis on the compressed positive electrode, the first positive electrode active material layer had a thickness of about 100 µm, and the second positive electrode active material layer had a thickness of about 100 µm.

### (3) Manufacturing of Negative Electrode

97.3 wt% of graphite, 0.5 wt% of Denka black, 0.9 wt% of carboxylmethyl cellulose, and 1.3 wt% of a styrenebutadiene rubber were mixed in an aqueous solvent to prepare a negative electrode active material layer slurry. The prepared negative electrode active material slurry layer was coated on a copper foil current collector, and then dried and compressed to manufacture a negative electrode.

### (4) Manufacturing of Rechargeable Lithium Battery Cell

A polytetrafluoroethylene separator and an electrolyte solution, which was prepared by mixing ethylene carbonate and dimethyl carbonate in a volume ratio of 3 : 7 and dissolving 1 M LiPF₆ in the mixed solvent, were used with the positive and negative electrodes to manufacture a rechargeable lithium battery cell in a conventional method.

### Example 2

A positive electrode and a rechargeable lithium battery cell were manufactured substantially in the same manner as in Example 1, with a difference that the amount of Li_{1.3}Al_{0.3}Ti_{1.7}P₃O₁₂ was adjusted to 1.0 wt%, and the amount of LiFePO₄ was adjusted to 96.7 wt% in the process of '(2) Preparation of Second Positive Electrode Active Material Layer' of Example 1.

### Example 3

A positive electrode and a rechargeable lithium battery cell were manufactured substantially in the same manner as in Example 1, with a difference that the amount of Li_{1.3}Al_{0.3}Ti_{1.7}P₃O₁₂ was adjusted to 3.0 wt%, and the amount of LiFePO₄ was adjusted to 94.7 wt% in the process of '(2) Preparation of Second Positive Electrode Active Material Layer' of Example 1.

### Comparative Example 1

A positive electrode and a rechargeable lithium battery cell were manufactured substantially in the same manner as in Example 1, with a difference that the oxide-based solid electrolyte was not used (LiFePO₄: 97.7 wt%, polyvinylidene fluoride binder: 1.2 wt%, carbon nanotube conductive material: 1.1 wt%) in the process of '(2) Preparation of Second Positive Electrode Active Material Layer' of Example 1.

### Comparative Example 2

A positive electrode and a rechargeable lithium battery cell were manufactured substantially in the same manner as in Example 1, with a difference that the amount of Li_{1.3}Al_{0.3}Ti_{1.7}P₃O₁₂ was adjusted to 0.08 wt%, and the amount of LiFePO₄ was adjusted to 97.62 wt% in the process of '(2) Preparation of Second Positive Electrode Active Material Layer' of Example 1.

### Comparative Example 3

A positive electrode and a rechargeable lithium battery cell were manufactured substantially in the same manner as in Example 1, with a difference that the amount of Li_{1.3}Al_{0.3}Ti_{1.7}P₃O₁₂ was adjusted to 5.0 wt%, and the amount of LiFePO₄ was adjusted to 92.7 wt% in the process of '(2) Preparation of Second Positive Electrode Active Material Layer' of Example 1.

### Comparative Example 4

A positive electrode and a rechargeable lithium battery cell were manufactured substantially in the same manner as in Example 1, with a difference that the amount of Li_{1.3}Al_{0.3}Ti_{1.7}P₃O₁₂ was adjusted to 7.0 wt%, and the amount of LiFePO₄ was adjusted to 90.7 wt% in the process of '(2) Preparation of Second Positive Electrode Active Material Layer' of Example 1.

### Comparative Example 5

A positive electrode and a rechargeable lithium battery cell were manufactured substantially in the same manner as in Example 1, with a difference that the amount of Li_{1.3}Al_{0.3}Ti_{1.7}P₃O₁₂ was adjusted to 9.0 wt%, and the amount of LiFePO₄ was adjusted to 88.7 wt% in the process of '(2) Preparation of Second Positive Electrode Active Material Layer' of Example 1.

### Reference Example 1

A positive electrode and a rechargeable lithium battery cell were manufactured substantially in the same manner as in Example 1, with a difference that Li_{0.36}La_{0.55}TiO₃ instead of the Li_{1.3}Al_{0.3}Ti_{1.7}P₃O₁₂ was used as the oxide-based solid electrolyte in the process of '(2) Preparation of Second Positive Electrode Active Material Layer' of Example 1.

### Reference Example 2

A positive electrode and a rechargeable lithium battery cell were manufactured substantially in the same manner as in Example 1,with a difference that Li_{1.5}Al_{0.5}Ge_{1.5}P₃O₁₂ instead of the Li_{1.3}Al_{0.3}Ti_{1.7}P₃O₁₂ was used as the oxide-based solid electrolyte in the process of '(2) Preparation of Second Positive Electrode Active Material Layer' of Example 1.

### Reference Example 3

A positive electrode and a rechargeable lithium battery cell were manufactured substantially in the same manner as in Example 1, with a difference that Li_{1.3}Al_{0.3}Ti_{1.7}P₃O₁₂ having an average particle diameter (D₅₀) of 0.08 µm was used in the process of '(2) Preparation of Second Positive Electrode Active Material Layer' of Example 1.

### Reference Example 4

A positive electrode and a rechargeable lithium battery cell were manufactured substantially in the same manner as in Example 1, with a difference that Li_{1.3}Al_{0.3}Ti_{1.7}P₃O₁₂ having an average particle diameter (D₅₀) of 6.4 µm was used in the process of '(2) Preparation of Second Positive Electrode Active Material Layer' of Example 1.

### Evaluation Example 1: Measurement of Ionic Resistance of Positive Electrode

The positive electrodes of the examples, the comparative examples, and the reference examples were measured with respect to ionic resistance, and the results are shown in Table 1 below. The specific evaluation method is as follows.

For each of the positive electrodes, a symmetric cell consisting of two positive electrodes was fabricated, and then subjected to SC-EIS (square current electrochemical impedance spectroscopy) by setting an amplitude Va to 5 mV. The measured results were used to separate the ionic resistance alone among the internal resistances of each of the positive electrodes according to the transmission line model theory.

### Evaluation Example 2: Measurement of Resistance of Positive Electrode Plate

The positive electrodes of the examples, the comparative examples, and the reference examples were evaluated with respect to Hioki electrode plate resistance, and the results are shown in Table 1 below. The specific evaluation method is as follows.

The positive electrodes were evaluated with respect to electrode resistance by using Hioki 46-pin multi-pole electrode plate meter. Herein, electrode mixture resistance was measured at a current of 100 µA and a voltage of 5 V.

### Evaluation Example 3: Performance Evaluation of Rechargeable Lithium Battery Cell

The rechargeable lithium battery cells of the examples, the comparative examples, and the reference examples were evaluated with respect to initial discharge capacity, initial charge and discharge efficiency, and a capacity retention rate (cycle-life characteristics), and the results are shown in Table 1 below. The specific evaluation method is as follows.

The rechargeable lithium battery cells were initially charged at a constant current (0.2 C) and a constant voltage (4.25 V, 0.05 C cut-off), paused for 10 minutes, and discharged to 3.0 V at the constant current (0.2 C) at 25 °C for initial charge and discharge. Herein, the initial discharge capacity and the initial charge capacity were measured, and a ratio of the initial discharge capacity to the initial charge capacity was calculated and shown as initial charge and discharge efficiency.

After the initial charge and discharge, the cells were 50 times repeatedly charged and discharged at 0.5 C/0.5 C at 25 °C to measure discharge capacity at the 50^{th} cycle. A ratio of the discharge capacity at the 50^{th} cycle to the discharge capacity at the 1^{st} cycle was calculated and shown as a capacity retention rate (cycle-life characteristics).

**Table 1:**

| | First positive electrode active | Second positive electrode active | Ionic resistance (Ωcm | Mixture electron resistance | Initial discharge capacity (mAh/g) | Initial charging and dischar | 50^{th} capacity reten |
|---|---|---|---|---|---|---|---|
| | material layer | material layer | ²⁾ | (Ωcm) | | ging efficiency (%) | tion rate (%) |
| Example 1 | LFP+Ni | LFP+LATP 0.5 wt% | 11.6 | 3.57 | 150.2 | 82.3 | 85.3 |
| Example 2 | LFP+Ni | LFP+LATP 1.0 wt% | 11.9 | 3.21 | 150.0 | 84.5 | 85.1 |
| Example 3 | LFP+Ni | LFP+LATP 3.0 wt% | 13.4 | 2.85 | 148.6 | 84.6 | 82.8 |
| Comparative Example 1 | LFP+Ni | LFP | 11.3 | 4.21 | 140.1 | 75.1 | 82.0 |
| Comparative Example 2 | LFP+Ni | LFP+LATP 0.08 wt% | 11.4 | 4.15 | 142.7 | 75.4 | 82.5 |
| Comparative Example 3 | LFP+Ni | LFP+LATP 5.0 wt% | 15.9 | 2.62 | 142.0 | 84.6 | 80.2 |
| Comparative Example 4 | LFP+Ni | LFP+LATP 7.0 wt% | 16.8 | 2.56 | 138.5 | 84.4 | 78.3 |
| Comparative Example 5 | LFP+Ni | LFP+LATP 9.0 wt% | 18.5 | 2.37 | 137.2 | 84.0 | 77.5 |
| Reference Example 1 | LFP+Ni | LFP+LLT 0.5 wt% | 11.7 | 3.59 | 149.3 | 82.1 | 85.1 |
| Reference Example 2 | LFP+Ni | LFP+LAGP 0.5 wt% | 11.8 | 3.62 | 148.9 | 82.1 | 85.2 |
| Reference Example 3 | LFP+Ni | LFP+LATP (0.08 µm) | 11.4 | 3.12 | 149.2 | 82.4 | 84.8 |
| Reference Example 4 | LFP+Ni | LFP+LATP (6.4 µm) | 12.0 | 3.89 | 146.7 | 81.5 | 84.5 |

Referring to Table 1, Examples 1 to 3 exhibited ionic resistance of 11.6 Ωcm² to 13.4 Ωcm², mixture electron resistance of 2.85 Ωcm to 3.57 Ωcm, initial discharge capacity of 148.6 mAh/g to 150.2 mAh/g, and initial charge and discharge efficiency of 82.3% to 84.6% and particularly, a capacity retention rate of 82.8% to 85.3%.

Comparative Example 1, whose second positive electrode active material layer included no oxide-based solid electrolyte, exhibited a low capacity retention rate and significantly low initial charge and discharge efficiency. In other words, it was confirmed that the second positive electrode active material layer included an oxide-based solid electrolyte, thereby improving safety of the positive electrode and also, cycle-life characteristics.

Comparative Example 2 where the amount of the oxide-based solid electrolyte was adjusted to be substantially low and Comparative Examples 3 to 5 where the amount of the oxide-based solid electrolyte was adjusted to be substantially high, exhibited substantially high ionic resistance and substantially low capacity retention rate. In other words, it was confirmed that as the amount of the oxide-based solid electrolyte included in the second positive electrode active material layer was controlled, ionic resistance was reduced, thereby improving cycle-life characteristics of a battery cell.

On the other hand, Reference Examples 1 to 4 exhibited ionic resistance of 11.4 Ωcm² to 12.0 Ωcm², mixture electron resistance of 3.12 Ωcm to 3.89 Ωcm, initial discharge capacity of 146.7 mAh/g to 149.3 mAh/g, and initial charge and discharge efficiency of 81.5% to 82.4% and particularly, a capacity retention rate of 84.5% to 85.2%. In other words, it was confirmed that a type and an average particle diameter of an oxide-based solid electrolyte were controlled to achieve physical properties to a desire level.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10), comprising:
a current collector;
a first positive electrode active material layer on the current collector; and
a second positive electrode active material layer on the first positive electrode active material layer;
wherein the first positive electrode active material layer comprises a first positive electrode active material comprising a lithium iron phosphate-based compound,
the second positive electrode active material layer comprises a second positive electrode active material including a lithium iron phosphate-based compound and an oxide-based solid electrolyte, and
the oxide-based solid electrolyte is included in an amount in a range of ≥ 0.1 wt% to ≤ 3.0 wt% based on 100 wt% of a total of the second positive electrode active material layer.

2. The positive electrode (10) as claimed in claim 1, wherein the oxide-based solid electrolyte is included in an amount in a range of ≥ 0.5 wt% to ≤ 2.0 wt% based on 100 wt% of a total of the second positive electrode active material layer.

3. The positive electrode (10) as claimed in claim 1 or 2, wherein:
the oxide-based solid electrolyte comprises at least one of garnet ceramics of Li_{1+x+y}AlₓTi₂₋ₓSi_{y}P_{3-y}O₁₂(LATP)(0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂, and Li₃₊ₓLa₃M₂O₁₂;
M comprises at least one of Te, Nb, and Zr; and
x is an integer ranging from 1 to 10.

4. The positive electrode (10) as claimed in any one of claims 1 to 3, wherein an average particle diameter (D₅₀) of the oxide-based solid electrolyte is in a range of 0.05 µm to ≤ 7.0 µm.

5. The positive electrode (10) as claimed in any one of claims 1 to 4, wherein the first positive electrode active material layer comprises the oxide-based solid electrolyte in an amount less than or equal to 0.01 wt% based on a total of 100 wt% of the first positive electrode active material layer.

6. The positive electrode (10) as claimed in any one of claims 1 to 5, wherein the lithium iron phosphate-based compound of the first positive electrode active material and the lithium iron phosphate-based compound of the second positive electrode active material are each independently represented by one of Chemical Formula 1 and Chemical Formula 2:
Chemical Formula 1: Liₐ₁Fe₍₁₋ₓ₁₎M¹ₓ₁PO₄;
wherein, in Chemical Formula 1, 0.90≤a1≤1.5, 0≤x1≤0.4, and M¹ comprises at least one of Al, B, Ca, Ce, Cr, Cu, La, Mg, Mn, Mo, Nb, Ni, Si, Sn, Sr, Ti, V, W, Y, Zn, and Zr,
Chemical Formula 2: Liₐ₂Mnₓ₂Fe_{(1-x2-y2)}M²_{y2}PO₄;
wherein, in Chemical Formula 2, 0.90≤a2≤1.5, 0.1≤x2≤0.9, 0≤y2≤0.9, and M² comprises at least one of Al, B, Ca, Ce, Cr, Cu, La, Mg, Mo, Nb, Ni, Sn, Si, Sn, Sr, Ti, V, W, Y, Zn, and Zr.

7. The positive electrode (10) as claimed in any one of claims 1 to 6, wherein:
the lithium iron phosphate-based compound of the first positive electrode active material and the lithium iron phosphate-based compound of the second positive electrode active material each independently comprises at least one of Al, Mg, Ti, and V, and
at least one of Al, Mg, Ti, and V is included in an amount in a range of 0.1 mol% to ≤ 0.5 mol% based on 100 mol% of a total metal excluding lithium in the lithium iron phosphate-based compound.

8. The positive electrode (10) as claimed in any one of claims 1 to 7, wherein:
the first positive electrode active material and the second positive electrode active material each independently comprises at least one of first particles in the form of an assembly in which a plurality of primary particles are agglomerated, and second particles in a form of single particles,
an average particle diameter (D₅₀) of the first particles is in a range of 6 µm to ≤ 25 µm, and
an average particle diameter (D₅₀) of the second particles is in a range of 0.1 µm to ≤ 2 µm.

9. The positive electrode (10) as claimed in any one of claims 1 to 8, wherein at least one of the first positive electrode active material layer and the second positive electrode active material layer further comprises a third positive electrode active material comprising a lithium nickel-based composite oxide.

10. The positive electrode (10) as claimed in any one of claims 1 to 9, wherein at least one of the first positive electrode active material layer and the second positive electrode active material layer further comprises a third positive electrode active material comprising a lithium nickel-based composite oxide; and wherein:
the first positive electrode active material layer further comprises the third positive electrode active material, and
in the first positive electrode active material layer, the first positive electrode active material is included in an amount in a range of 60 wt% to ≤ 95 wt%, and the third positive electrode active material is included in an amount in a range of 5 wt% to ≤ 40 wt%, based on a total of 100 wt% of the first positive electrode active material and the third positive electrode active material.

11. The positive electrode (10) as claimed in any one of claims 1 to 10, wherein at least one of the first positive electrode active material layer and the second positive electrode active material layer further comprises a third positive electrode active material comprising a lithium nickel-based composite oxide; and wherein the lithium nickel-based composite oxide of the third positive electrode active material is represented by Chemical Formula 3:
Chemical Formula 3: Liₐ₃Niₓ₃M³_{y3}M⁴_{z3}O_{2-b3}X_{b3};
wherein 0.9≤a3≤1.8, 0.3≤x3≤1, 0≤y3≤0.7, 0≤z3≤0.7, 0.9≤x3+y3+z3≤1.1, and 0≤b3≤0.1, M³ and M⁴ each independently comprises one or more of Al, B, Ba, Ca, Ce, Co, Cr, Cu, Fe, Mg, Mn, Mo, Nb, Si, Sn, Sr, Ti, V, W, Y, Zn, and Zr, and X comprises one or more of F, P, and S.

12. The positive electrode (10) as claimed in any one of claims 1 to 11, wherein at least one of the first positive electrode active material layer and the second positive electrode active material layer further comprises a third positive electrode active material comprising a lithium nickel-based composite oxide; and wherein in a lithium nickel-based composite oxide of the third positive electrode active material, nickel is included in an amount greater than or equal to 80 mol%, based on a total of 100 mol% of metals other than lithium.

13. The positive electrode (10) as claimed in any one of claims 1 to 12, wherein at least one of the first positive electrode active material layer and the second positive electrode active material layer further comprises a third positive electrode active material comprising a lithium nickel-based composite oxide wherein:
the third positive electrode active material comprises at least one of large particles having an average particle diameter (D₅₀) in a range of 10 µm to ≤ 25 µm, and small particles having an average particle diameter (D₅₀) in a range of 1 µm to ≤ 8 µm,
the large particles are in a form of secondary particles formed by agglomeration of a plurality of primary particles, and
the small particles are in a form of secondary particles or single particles.

14. The positive electrode (10) as claimed in any one of claims 1 to 13, wherein:
a thickness of the first positive electrode active material layer is in a range of 20 µm to ≤ 200 µm, and
a thickness of the second positive electrode active material layer is in a range of 20 µm to ≤ 200 µm; and/or
wherein a ratio of a thickness of the first positive electrode active material layer to a thickness of the second positive electrode active material layer is in a range of 10:90 to 90:10.

15. A rechargeable lithium battery (100), comprising:
the positive electrode (10) as claimed in any one of claims 1 to 14;
a negative electrode (20); and
an electrolyte.
